# EUROPEAN PATENT SPECIFICATION

(11) **EP 1 401 222 B1**
(45) Date of publication and mention of the grant of the patent: **04.08.2010**
(21) Application number: 03020597.5
(22) Date of filing: 18.09.2003
(51) Int. Cl.: H04W 4/06

(54) **Radio communication system, mobile station and radio network controller**
Funkkommunikationssystem, Mobilstation und Funknetzsteuerung
Système de radiocommunication, station mobile et contrôleur de réseau radio

(30) Priority: 19.09.2002 JP 2002274128
(43) Date of publication of application: 24.03.2004
(73) Proprietor: NTT DoCoMo, Inc., Tokyo 100-6150 (JP)
(72) Inventor: Moon, Sung Uk, NTT DoCoMo, Inc, Chiyoda-ku Tokyo (JP); Nakamura, Takehiro, NTT DoCoMo, Inc, Chiyoda-ku Tokyo (JP); Ishii, Minami, NTT DoCoMo, Inc, Chiyoda-ku Tokyo (JP); Ueda, Shinji, NTT DoCoMo, Inc, Chiyoda-ku Tokyo (JP); Koshino, Masayuki, NTT DoCoMo, Inc, Chiyoda-ku Tokyo (JP)
(74) Representative: HOFFMANN EITLE

(56) References cited:
- WO-A-01/65885
- US-A- 5 530 437
- US-A- 5 727 002
- ADELSTEIN F ET AL: "Building dynamic multicast trees in mobile networks" PARALLEL PROCESSING, 1999. PROCEEDINGS. 1999 INTERNATIONAL WORKSHOPS ON AIZU-WAKAMATSU, JAPAN 21-24 SEPT. 1999, LOS ALAMITOS, CA, USA,IEEE, US, 21 September 1999 (1999-09-21), pages 17-22, XP010356077 ISBN: 0-7695-0353-5

## Description

### BACKGROUND OF THE INVENTION

### 1. Field of the Invention

The present invention relates to a radio communication system for performing multicast communication, a mobile station and a radio network controller.

### 2. Description of the Related Art

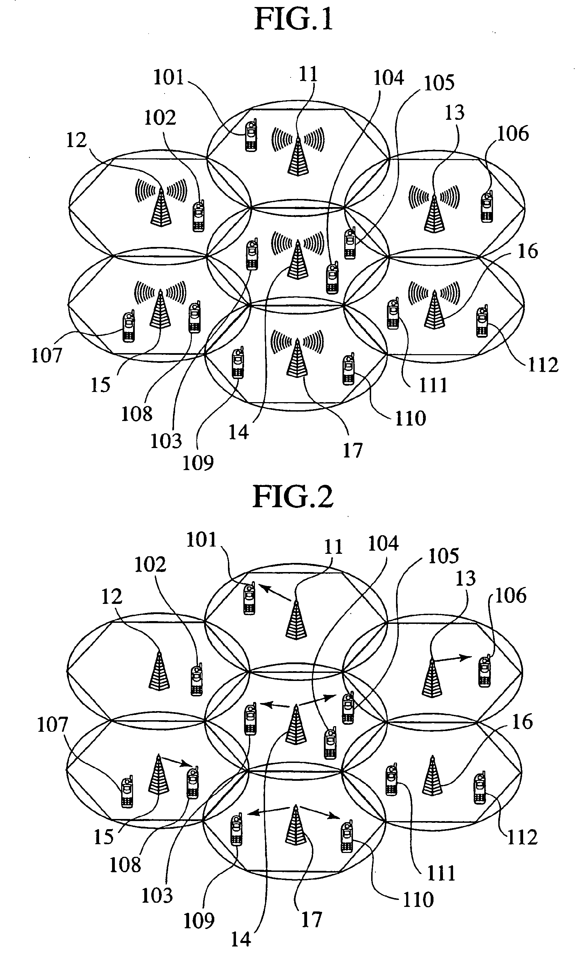

As shown in FIG. 1, broadcast communication whereby a plurality of base stations 11 to 17 transmit common information to unspecified mobile stations 101 to 112 in predetermined areas is known in a conventional radio communication system.

As shown in FIG. 2, multicast communication whereby a plurality of base stations 11 to 17 transmit common information to specific mobile stations joining in (belonging to) a specific group is known in a conventional radio communication system.

In the multicast communication, a plurality of mobile stations forms one multicast group. In order to start the multicast communication, one PICH (Paging indicator channel) is transmitted to each multicast group, and each mobile station returns a response signal to the received PICH.

However, there is a problem in that a plurality of response signals are transmitted to the radio network controller RNC at approximately the same time even though the multicast communication can be started with one response signal, so that the load on receiving control of the radio network controller RNC is increased in the conventional multicast communication.

US 5,530,437 discloses a method and apparatus that identify respondents to a poll transmitted in a radio communication system comprising a transmitter and a plurality of receivers. A subset of a plurality of portable communication units (PCUs) are each programmed with a bit pattern corresponding uniquely to each PCU and chosen such that when a group of at least two PCUs are received simultaneously, the resultant received interference bit pattern provides a non-zero probability of correctly identifying at least a portion of the group, and a substantially zero probability of erroneously identifying a PCU not in the group. The method further comprises the steps of transmitting thereafter from the subset of PCUs simultaneous, co-channel responses to the poll, each response comprising one of the programmed bit patterns, and determining therefrom identities of received PCUs by the interference bit patterns received at the plurality of receivers.

### BRIEF SUMMARY OF THE INVENTION

According to the present invention, there is provided a radio communication system having a radio network controller, base stations and mobile stations, to perform multicast communication.

The radio network controller comprises a control signal transmitter configured to divide a multicast group into subgroups, to divide a control signal for the multicast group into control signals for the subgroups and to transmit the control signals for the subgroups to the base station.

The mobile station comprises a response signal creator configured to create a response signal to the control signal for at least one subgroup, a transmission timing detector configured to detect a transmission timing of the response signal from the control signal for at least one subgroup, and a response signal transmitter configured to transmit the response signal to the base station with the transmission timing.

The present invention also provides a mobile station supporting multicast communication. The mobile station comprises a response signal creator configured to create a response signal to a control signal for at least one subgroup into which a control signal for multicast group is divided, a transmission timing detector configured to detect a transmission timing of the response signal from the control signal for at least one subgroup, and a response signal transmitter configured to transmit the response signal to a base station with the transmission timing.

The present invention also provides a radio network controller supporting multicast communication. The radio network controller comprises a control signal transmitter configured to divide a multicast group into subgroups, to divide a control signal for the multicast group into control signals for the subgroups, and to transmit the control signals for the subgroups to a base station.

The radio network controller may perform a predetermined processing on a predetermined number of response signals. The predetermined number of response signals respond to the control signal for the multicast group, and are transmitted from mobile stations joining in the multicast group. And the radio network controller may perform processing on the only the predetermined number of response signals. Any following response signal is unprocessed by the radio network controller. The following response signals are transmitted from the mobile stations joining in the multicast group. The predetermined number may be one.

An embodiment of the present invention provides a radio communication system which can reduce the load on the radio network controller during multicast communication, a mobile station and a radio network controller which can be used in the above radio communication system.

### BRIEF DESCRIPTION OF THE SEVERAL VIEWS OF THE DRAWINGS

FIG. 1 is a diagram for explaining broadcast communication according to the prior art.
FIG. 2 is a diagram for explaining multicast communication according to the prior art.
FIG. 3 is a diagram showing the entire configuration of a radio communication system according to one embodiment of the present invention.
FIG. 4 is a functional block diagram of a mobile station in the radio communication system according to the embodiment.
FIG. 5 is a functional block diagram of a radio network controller in the radio communication system according to the embodiment.
FIG. 6 is a sequence diagram illustrating the operation of the radio communication system according to the embodiment.

### DETAILED DESCRIPTION OF EMBODIMENT

### A configuration of a radio communication system according to an embodiment of the present invention

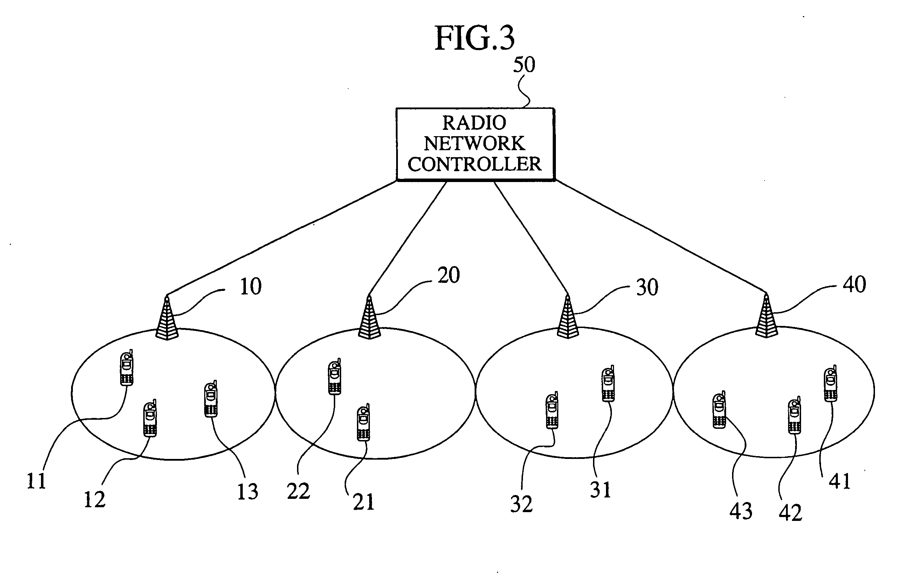

FIG. 3 shows the entire configuration of a radio communication system according to an embodiment of the present invention.

As shown in FIG. 3, the radio communication system according to the embodiment comprises four base stations 10, 20, 30 and 40 under a radio network controller 50.

In the radio communication system according to the embodiment, the base station 10 manages mobile stations 11 to 13, the base station 20 manages mobile stations 21 and 22, the base station 30 manages mobile stations 31 and 32, and the base station 40 manages mobile stations 41 to 43. The mobile stations 11, 12, 21, 41, 42 and 43 join in the same multicast group A in the embodiment.

The radio network controller 50 divides the multicast group A into three subgroups A1 to A3 in the embodiment. The radio network controller 50 allocates each of six mobile stations 11, 12 , 21, 41, 42 and 43 joining in the multicast group A to one of the subgroups A1 to A3.

For example, the radio network controller 50 allocates the mobile station 11 and 12 to the subgroup A1, allocates the mobile station 21 and 41 to the subgroup A2, and allocates the mobile station 42 and 43 to the subgroup A3.

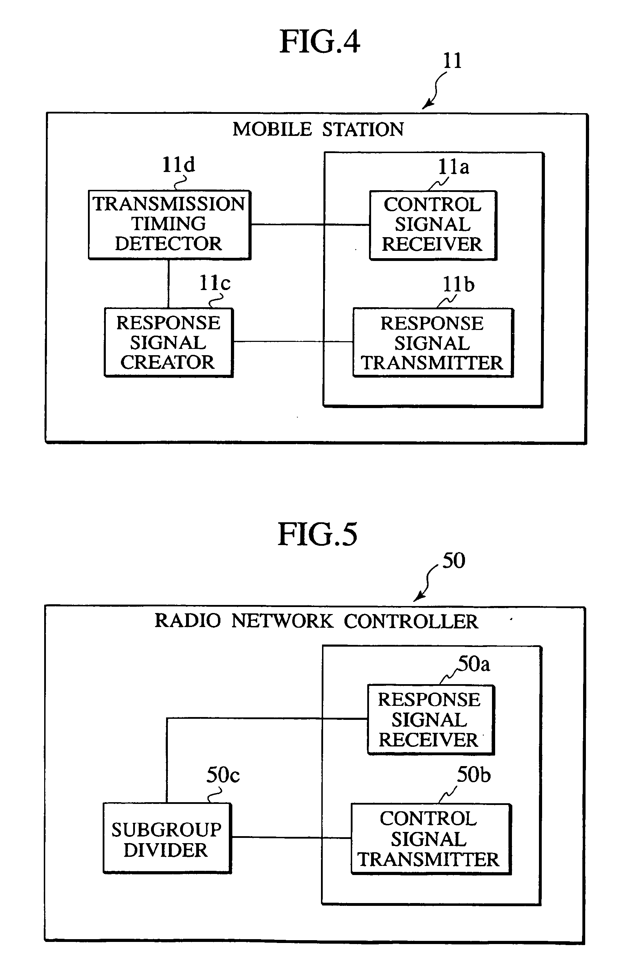

FIG. 4 shows a functional block diagram of the mobile station used in the radio communication system according to the embodiment. Functions of a plurality of mobile stations 11 to 43 are basically the same, so that the function of the mobile station 11 will be explained as follows.

As shown in FIG. 4, the mobile station 11 is configured with a control signal receiver 11a, a response signal transmitter 11b, a response signal creator 11c and a transmission timing detector 11d.

The control signal receiver 11a is configured to receive a control signal for the multicast group A and a control signal for the subgroup A1 which are transmitted from the base station 10.

The response signal creator 11c is configured to create a response signal to the control signal for the multicast group A or the control signal for the subgroup A1.

The transmission timing detector 11d is configured to detect a transmission timing of the response signal in the subgroup A1 from the received control signal for the subgroup A1.

For example, the transmission timing detector 11d can detect 100ms as the transmission timing of the response signal in the subgroup A1, detect 200ms as the transmission timing of the response signal in the subgroup A2, detect 300ms as the transmission timing of the response signal in the subgroup A3.

And the transmission timing detector 11d can detect a time X (for example, 19:00) as the transmission timing of the response signal in the subgroup A1, detect a time Y (for example, 19:01) as the transmission timing of the response signal in the subgroup A2, detect a time Z (for example, 19:02) as the transmission timing of the response signal in the subgroup A3.

The response signal transmitter 11b is configured to transmit the created response signal to the base station 10 with the detected transmission timing.

For example, the response signal transmitter 11b transmits the response signal to the base station 10 100ms after receiving the control signal for the subgroup A1 (or at the time X), transmits the response signal to the base station 10 200ms after receiving the control signal for the subgroup A3 (or at the time Y), and transmits the response signal to the base station 10 300ms after receiving the control signal for the subgroup A3 (or at the time Z).

FIG. 5 shows a functional block diagram of the radio network controller 50 used in the radio communication system according to the embodiment.

As shown in FIG. 5, the radio network controller 50 is configured with a response signal receiver 50a, a control signal transmitter 50b and a subgroup divider 50c.

The subgroup divider 50c is configured to divide the multicast group A into the subgroups A1 to A3, and to divide a control signal for the multicast group A into control signals for the subgroups A1 to A3.

The control signal transmitter 50b is configured to transmit the control signals for the subgroups A1 to A3 to the base station 10.

For example, the control signal transmitter 50b may transmit the control signals for the subgroups A1 to A3 to the base stations 10, 20 and 40.

The control signal transmitter 50b may transmit the control signals for the subgroups A1 to the base stations 10, transmit the control signals for the subgroups A2 to the base stations 20 and 40, and transmit the control signals for the subgroups A3 to the base stations 40.

The response signal receiver 50a is configured to receive the response signal to the control signal for the multicast group A from the mobile stations 11 and 12 at a different time.

### An operation of the radio communication system according to the embodiment

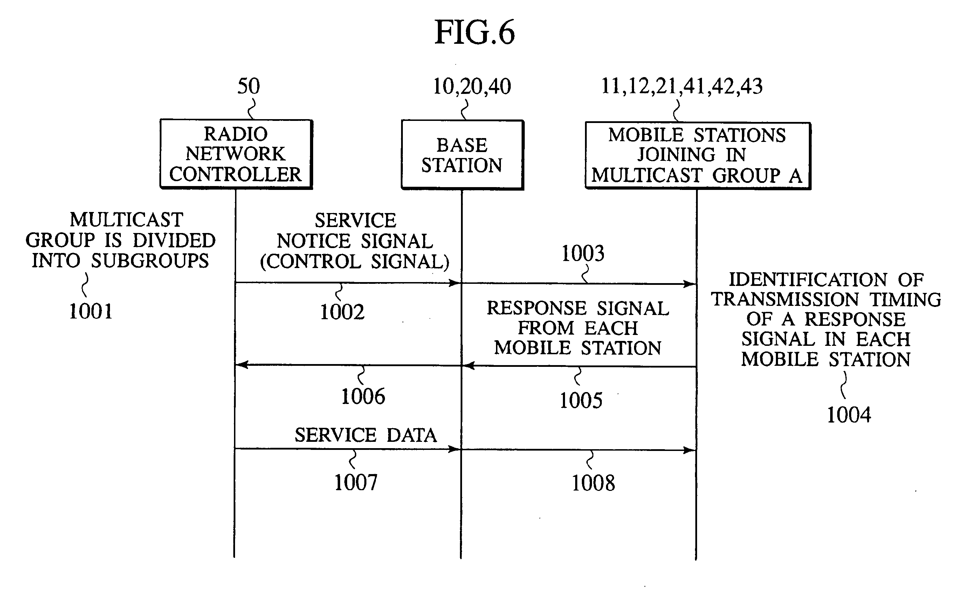

Referring to FIG. 6, the operation where the radio network controller 50 performs predetermined processing (for example, a service notice processing, or an authentication processing) on the mobile stations 11, 12, 21, 41, 42, 43 joining in the multicast group A in the radio communication system according to the embodiment will be described.

As shown in FIG. 6, in step 1001, the radio network controller 50 allocates each of six mobile stations 11, 12, 21, 41, 42 and 43 joining in the multicast group A to one of the subgroups A1 to A3.

In step 1002, the radio network controller 50 transmits a control signal such as a service notice signal and an authentication signal (a control signal for each of the subgroups A1 to A3) to three base stations 10, 20 and 40.

In step 1003, each of the base stations 10, 20 and 40 receives the control signal transmitted from the radio network controller 50. The control signals transmitted by each of the base stations 10, 20 and 40 reach the mobile stations 11, 12, 21, 41, 42 and 43 joining in the multicast group A under the base stations 10, 20 and 40.

In step 1004, each of the mobile stations 11, 12, 21, 41, 42 and 43 receives the control signal from each of the base stations 10, 20 and 40, and detects transmission timing of a response signal in the subgroup A1, A2 or A3 in which each of the mobile stations 11, 12, 21, 41, 42 and 43 is joining.

In step 1005, each of the mobile stations 11, 12 , 21 , 41, 42 and 43 creates the response signal to the control signal for the each of the subgroups A1 to A3 , and transmits the response signal to the base stations 10, 20 and 40 with the detected transmission timing.

In step 1006, each of the base stations 10, 20 and 40 receives the response signal from each of the mobile stations 11, 12, 21, 41, 42 and 43, and transmits the received response signal to the radio network controller 50.

In step 1007, the radio network controller 50 transmits a service data to the base stations 10, 20 and 40, in accordance with the response signals received from each of the mobile stations 11, 12, 21, 41, 42 and 43.

In step 1008, each of the base stations 10, 20 and 40 transmits the received service data to each of the mobile stations 11, 12, 21, 41, 42 and 43.

The radio network controller 50 can be configured to perform a predetermined processing on only a predetermined number of response signals (for example, a first response signal). The predetermined number of response signals are transmitted from each mobile station 11, 12, 21, 41, 42 or 43 joining in the multicast group A.

In other words, any response signal following the predetermined number of response signals is unprocessed by the radio network controller 50. The following response signals are transmitted from the mobile stations 11, 12, 21, 41, 42 and 43 joining in the multicast group A.

The radio network controller 50 can determine any number (for example, one, two and so on) as the predetermined number.

### Functions and effects of the radio communication system according to the embodiment

The radio communication system according to the embodiment can reduce the load on the radio network controller 50 caused by response signals which are transmitted from a plurality of mobile stations 11, 12, 21, 41 42 and 43, and which reach the radio network controller 50 at approximately the same time, when common information are transmitted to a plurality of mobile stations like multicast communication or broadcast communication.

An embodiment provides a radio communication system which can reduce the load on the radio network controller during multicast communication, a mobile station and a radio network controller which can be used in the above radio communication system.

Additional advantages and modifications will readily occur to those skilled in the art. Therefore, the invention in its broader aspects is not limited to the specific details and the representative embodiment shown and described herein.

## Claims

1. A radio communication system having a radio network controller (50), base stations (10, 20, 30, 40) and mobile stations (11-13, 21-22, 31-32, 41-43), to perform multicast communication, wherein
the radio network controller (50) comprises a control signal transmitter (50b, 50c) configured to divide a multicast group into subgroups, to divide a control signal for the multicast group into control signals for the subgroups, and to transmit the control signals for the subgroups to the base station; and
a mobile station (11-13, 21-22, 31-32, 41-43) comprises:
a response signal creator (11c) configured to create a response signal to the control signal for at least one subgroup;
a transmission timing detector (11d) configured to detect a transmission timing of the response signal from the control signal for at least one subgroup; and
a response signal transmitter (11b) configured to transmit the response signal to the base station with the transmission timing.

2. A mobile station supporting multicast communication, the mobile station comprising:
a response signal creator (11c) configured to create a response signal to a control signal for at least one subgroup into which a control signal for a multicast group is divided;
a transmission timing detector (11d) configured to detect a transmission timing of the response signal from the control signal for at least one subgroup; and
a response signal transmitter (11b) configured to transmit the response signal to a base station with the transmission timing.

3. A radio network controller supporting multicast communication, the radio network controller comprising:
a control signal transmitter (50b, 50c) configured to divide a multicast group into subgroups, to divide a control signal for the multicast group into control signals for the subgroups, and to transmit the control signals for the subgroups to a base station.

4. The radio network controller according to claim 3, wherein
the radio network controller is configured to perform a predetermined processing on a predetermined number of response signals, the predetermined number of response signals responding to the control signal for the multicast group and being transmitted from mobile stations joining in the multicast group; and
the radio network controller is configured to perform processing on only the predetermined number of response signals, and any following response signal is unprocessed by the radio network controller, the following response signals being transmitted from the mobile stations joining in the multicast group.

5. The radio network controller according to claim 4, wherein the predetermined number is one.

## Patentansprüche

1. Funkkommunikationssystem mit einem Funknetz-Controller (50), Basisstationen (10, 20, 30, 40) und Mobilstationen (11-13, 21-22, 31-32, 41-43), um Multicast-Kommunikation auszuführen, wobei
der Funknetz-Controller (50) einen Steuersignalsender (50b, 50c) umfasst, der konfiguriert ist, um eine Multicast-Gruppe in Untergruppen zu teilen, um ein Steuersignal für die Multicast-Gruppe in Steuersignale für die Untergruppen zu teilen, und, um die Steuersignale für die Untergruppen zu der Basisstation zu übertragen; und
eine Mobilstation (11-13, 21-22, 31-32, 41-43) umfassend:
einen Antwortsignalerzeuger (llc), der konfiguriert ist, um ein Antwortsignal zu erzeugen zu dem Steuersignal für mindestens eine Untergruppe;
einen Übertragungstimingerfasser (11d), der konfiguriert ist, um ein Übertragungstiming des Antwortsignals von dem Steuersignal für mindestens eine Untergruppe zu erfassen; und
einen Antwortsignalsender (11b), der konfiguriert ist, um das Antwortsignal zu der Basisstation mit dem Übertragungstiming zu übertragen.

2. Mobilstation, die Multicast-Kommunikation unterstützt, die Mobilstation umfassend:
einen Antwortsignalerzeuger (llc), der konfiguriert ist, um ein Antwortsignal zu einem Steuersignal zu erzeugen für mindestens eine Untergruppe, in welche ein Steuersignal für eine Multicast-Gruppe geteilt ist;
einen Übertragungstimingerfasser (11d), der konfiguriert ist, um ein Übertragungstiming des Antwortsignals von dem Steuersignal für mindestens eine Untergruppe zu erfassen; und
ein Antwortsignalsender (11b), der konfiguriert ist, um das Antwortsignal zu einer Basisstation zu übertragen, mit dem Übertragungstiming.

3. Funknetz-Controller, der Multicast-Kommunikation unterstützt, wobei der Funknetz-Controller umfasst:
einen Steuersignalsender (50b, 50c), der konfiguriert ist, um eine Multicast-Gruppe in Untergruppen zu teilen, um ein Steuersignal für die Multicast-Gruppe in Steuersignale für die Untergruppen zu teilen, und, um die Steuersignale für die Untergruppen zu einer Basisstation zu übertragen.

4. Funknetz-Controller nach Anspruch 3, wobei
der Funknetz-Controller konfiguriert ist, um eine vorbestimmte Verarbeitung auszuführen auf einer vorbestimmten Anzahl von Antwortsignalen, wobei die vorbestimmte Anzahl von Antwortsignalen auf das Steuersignal für die Multicast-Gruppe antworten und von den Mobilstationen übertragen werden, die in der Multicast-Gruppe zusammengefügt sind; und
der Funknetz-Controller konfiguriert ist, um Verarbeitung, nur auf der vorbestimmten Anzahl von Antwortsignalen durchzuführen, und jedes nachfolgende Antwortsignal durch den Funknetz-Controller unverarbeitet ist, wobei die folgenden Antwortsignale von der Mobilstation übertragen werden, die in der Multicast-Gruppe zusammengefügt sind.

5. Funknetz-Controller nach Anspruch 4, wobei die vorbestimmte Anzahl Eins ist.

## Revendications

1. Système de radiocommunication possédant un contrôleur (50) de réseau radio, des stations de base (10, 20, 30, 40) et des stations mobiles (11-13, 21-22, 31-32, 41-43) pour une communication à diffusion de groupe, dans lequel
la contrôleur (50) de réseau radio comprend un transmetteur (50b, 50c) de signal de commande, configuré pour diviser une groupe de diffusion en sous-groupes, diviser un signal de commande pour le groupe de diffusion en signaux de commande pour les sous-groupes, et transmettre les signaux de commande pour les sous-groupes à la station de base, et
une station mobile (11-13, 21-22, 31-32, 41-43) comprend :
un créateur (11c) de signal de réponse, configuré pour créer un signal de réponse au signal de commande pour au moins un sous-groupe,
un détecteur (11d) de durée de transmission, configuré pour détecter une durée de transmission du signal de réponse provenant du signal de commande pour au moins un sous-groupe, et
un transmetteur (11b) de signal de réponse configuré pour transmettre le signal de réponse à la station de base, avec la durée de transmission.

2. Station mobile pouvant fonctionner en communication à diffusion de groupe, comprenant
un créateur (11c) de signal de réponse, configuré pour créer un signal de réponse à un signal de commande pour au moins un sous-groupe dans lequel un signal de commande pour un groupe de diffusion est divisé,
un détecteur (11d) de durée de transmission, configuré pour détecter une durée de transmission du signal de réponse provenant du signal de commande pour au moins un sous-groupe, et
un transmetteur (11b) de signal de réponse configuré pour transmettre le signal de réponse à une station de base, avec la durée de transmission.

3. Contrôleur de réseau radio supportant une communication à diffusion de groupe, le contrôleur de réseau radio comprenant :
un transmetteur (50b, 50c) de signal de commande, configuré pour diviser un groupe de diffusion en sous-groupes, diviser un signal de commande pour le groupe de diffusion en signaux de commande pour les sous-groupes, et transmettre les signaux de commande pour les sous-groupes à une station de base

4. Contrôleur de réseau radio selon la revendication 3, dans lequel
le contrôleur de réseau radio est configuré pour effectuer un traitement prédéterminé sur un nombre prédéterminé de signaux de réponse, le nombre prédéterminé de signaux de réponse répondant au signal de commande pour le groupe de diffusion, et étant transmis à partir de stations mobiles se joignant au groupe de diffusion, et
le contrôleur de réseau radio est configuré pour effectuer un traitement uniquement sur le nombre prédéterminé de signaux de réponse, et tout signal de réponse ultérieur n'est pas traité par le contrôleur de réseau radio, les signaux de réponse ultérieurs étant transmis à partir des stations mobiles se joignant au groupe de diffusion.

5. Contrôleur de réseau radio selon la revendication 4, dans lequel le nombre prédéterminé est un.
